# EUROPÄISCHE PATENTSCHRIFT

(11) **EP 1 803 055 B1**
(45) Veröffentlichungstag und Bekanntmachung des Hinweises auf die Patenterteilung: **14.10.2009**
(21) Anmeldenummer: 05792145.4
(22) Anmeldetag: 31.08.2005
(51) Int. Cl.: G06F 3/033, H04N 7/18, G06T 3/20, B60R 1/00, G07C 5/08

(54) **Anordnung zur Verbesserung der Sicht aus einem Fahrzeug**
Arrangement for improving the visibility from a vehicle
Dispositif pour ameliorer la visibilité à partir d'un vehicule

(30) Priorität: 13.10.2004 DE 102004049840
(43) Veröffentlichungstag der Anmeldung: 04.07.2007
(73) Patentinhaber: ROBERT BOSCH GMBH, 70442 Stuttgart (DE)
(72) Erfinder: ROELKE, Volker, 31134 Hildesheim (DE)
(86) Internationale Anmeldenummer: PCT/EP2005/054288
(87) Internationale Veröffentlichungsnummer: WO 2006/040219

(56) Entgegenhaltungen:
- US-A1- 2003 090 570
- US-A1- 2004 090 525
- US-A1- 2004 119 822
- US-A1- 2004 143 373

## Beschreibung

### Stand der Technik

Die Erfindung betrifft eine Anordnung zur Verbesserung der Sicht aus einem Fahrzeug mittels Videokameras, die in verschiedene Blickrichtungen ausgerichtet sind.

Zur Verbesserung der Sicht aus einem Fahrzeug mit Hilfe von Videokameras wurden bereits viele Vorschläge gemacht, beispielsweise durch DE 296 12 563, wobei mindestens eine Videokamera in einem seitlichen Bereich, in einem rückwärtigen Bereich, in einem Kofferraumbereich oder in einem Dachbereich eines Fahrzeugs angeordnet ist. Ferner ist es durch JP 2003159995 A bekannt geworden, mehrere Kameras am Fahrzeug anzuordnen und durch einen Umschalter eines der Bilder dieser Kameras zur Wiedergabe auf einem Monitor auszuwählen. Der Fahrer muss sich dann entscheiden, welches Bild er auf dem Monitor sehen will, wobei es durchaus vorkommen kann, dass keines der Bilder den gewünschten Überblick ergibt.

Aus der US 2004/0143373 A1, siehe oberbegriff des Anspruchs 1 ist ein Verfahren und eine Vorrichtung zur Bereitstellung eines Sichtbereiches bekannt. Die Vorrichtung umfasst eine Kamera und eine Anzeige. Die US 2003/0090570 A1 offenbart eine Kraftfahrzeugumgebungsanzeige umfassend eine vorne am Kraftfahrzeug angebrachte Kamera und eine seitlich am Kraftfahrzeug angebrachte Kamera. Aus der US 2004/0119822 A1 ist eine Vorrichtung zur Anzeige mehrere Videosignale auf einem einzelnen Monitor in einem Kraftfahrzeug bekannt. Die US 2004/0090525 A1 offenbart eine Vorrichtung zur Überwachung des Innenraumes eines Kraftfahrzeuges.

### Vorteile der Erfindung

Die erfindungsgemäße Anordnung besteht darin, dass die von den Videokameras erfassten Kamerabilder zu einem Gesamtbild zusammengefasst werden und dass ein Bedienelement zur Auswahl eines wiederzugebenden Teils des Gesamtbildes vorgesehen ist. Hiermit ist die Auswahl des jeweils wiederzugebenden Bildes den natürlichen Sehgewohnheiten angepasst und beschränkt sich nicht auf wenige (in der Regel zwei) voreingestellte Blickrichtungen. Somit verbessert der Fahrer seine Kontrolle über den jeweils dargestellten Bereich der Fahrzeugumgebung und kann somit den für ihn aktuell relevanten Bereich einsehen. Die Unterstützung des Fahrens durch die erfindungsgemäße Anordnung und damit auch die Akzeptanz der Anordnung beim Fahrer werden damit verbessert.

Da im Allgemeinen die horizontale Ausdehnung des Gesichtsfeldes beim Fahren besonders wichtig ist, ist bei einer vorteilhaften Ausgestaltung der Erfindung vorgesehen, dass die Kamerabilder im Wesentlichen horizontal nebeneinander liegen und dass mit Hilfe des Bedienelements ein Schwenk innerhalb des Gesamtbildes möglich ist.

Eine andere vorteilhafte Ausgestaltung sieht vor, dass das Bedienelement ein Drehknopf ist. Dies hat den Vorteil, dass der Fahrer die Zuordnung zwischen der jeweiligen Blickrichtung und dem Bedienelement leicht erkennen kann. Es sind jedoch auch andere Bedienelemente möglich, die beispielsweise darin bestehen, dass das Bedienelement von zwei Tasten gebildet ist, die vorzugsweise am Lenkrad angeordnet sind.

Bei einer Weiterbildung der Erfindung ist vorgesehen, dass die Auswahl ferner automatisch von mindestens einem Sensor steuerbar ist. Ein solcher Sensor kann beispielsweise im Getriebe angeordnet sein und bewirken, dass ein für das Rückwärtsfahren geeignetes Bild wiedergegeben wird. Diese Weiterbildung kann derart ausgestaltet werden, dass zwischen der manuellen Auswahl und der vom Sensor gesteuerten Auswahl eine Umschaltmöglichkeit besteht. Es ist jedoch auch möglich vorzusehen, dass bei Vorliegen vorgegebener Sensorsignale eine Übersteuerung der mit Hilfe des Bedienelements eingestellten Auswahl möglich ist.

Außer den Videokameras, deren Kamerabilder zu einem Gesamtbild zusammengefasst werden, kann die Anordnung weiterer Videokameras am Fahrzeug sinnvoll sein. Deshalb ist gemäß einer anderen Weiterbildung vorgesehen, dass mindestens eine weitere Videokamera vorgesehen ist, deren Bild alternativ zum ausgewählten Teil des Gesamtbildes wiedergegeben wird.

Für die verschiedenen Aufgaben, beispielsweise Nachtsichtsysteme, Einparkhilfe, Anzeige des toten Winkels, können verschiedene Gesichtsfeldgrößen - bezogen auf die Darstellung auf einem Bildschirm, also verschiedene Abbildungsmaßstäbe - erforderlich sein. Bei einer anderen Weiterbildung der Erfindung ist daher vorgesehen, dass der Abbildungsmaßstab des wiederzugebenden Teils einstellbar ist.

Um beim Blick auf den Bildschirm dem Fahrer ohne weiteres zu erkennen zu geben, in welche Richtung er dabei sieht, kann die erfindungsgemäße Anordnung derart ausgebildet sein, dass an einem den ausgewählten Teil des Gesamtbildes darstellenden Bildschirm eine Anzeigevorrichtung vorgesehen ist, welche die jeweils getroffene Auswahl zeigt. Diese Anzeige kann beispielsweise durch eine auf einem Rahmen des Bildschirmes angeordnete LED-Leiste oder durch eine entsprechende Einblendung in das dargestellte Bild vorgenommen werden.

### Zeichnung

Ausführungsbeispiele der Erfindung sind in der Zeichnung anhand mehrerer Figuren dargestellt und in der nachfolgenden Beschreibung näher erläutert. Es zeigt:
Fig. 1 eine schematische Darstellung eines Fahrzeugs mit einer erfindungsgemäßen Anordnung,
Fig. 2 ein Ausführungsbeispiel für ein Bedienelement und
Fig. 3 eine schematische Darstellung mehrerer Kamerabilder und des ausgewählten Teils.

### Beschreibung des Ausführungsbeispiels

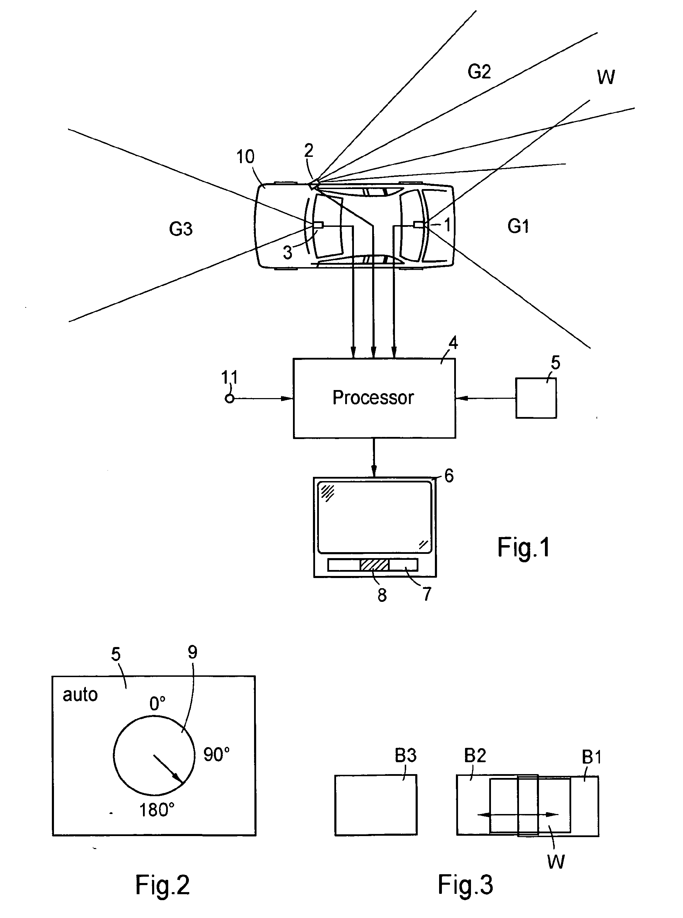

Das in Fig. 1 dargestellte Fahrzeug 10 ist mit drei Videokameras bestückt, nämlich einer Rückfahrkamera 1, einer Kamera 2 zur Überwachung des sogenannten toten Winkels und einer Kamera 3, die in Fahrtrichtung blickt, beispielsweise zu Zwecken der Nachtsicht. Die Gesichtsfelder der Kameras sind mit G1, G2 und G3 bezeichnet.

Die Ausgangssignale der Kameras 1 bis 3 werden einem digitalen Signalprozessor 4 zugeführt, der unter anderem verschiedene Transformationen vornimmt, damit sich überschneidende Kamerabilder zu einem Gesamtbild zusammengesetzt werden oder ein sich nicht mit anderen überschneidendes Kamerabild, wie beispielsweise das Bild der Kamera 3, unvermischt mit anderen Kamerabildern zu einem Bildschirm 6 leitet. Mit Hilfe eines Bedienelements 5 kann der jeweils wiederzugebende Teil des Gesamtbildes ausgewählt werden. Am Bildschirm 6 befindet sich eine Anzeigevorrichtung 7, bei der die Lage einer Markierung 8 die jeweilige Auswahl des wiederzugebenden Bildes anzeigt.

Eine geeignetes Bedienelement 5 ist in Fig. 2 dargestellt. Es besteht aus einem Drehknopf 9, dessen Zeiger von 0° über 90° auf 180° gedreht werden kann, je nachdem, welches Bild auf dem Bildschirm 6 angezeigt werden soll. In einer weiteren Stellung des Drehknopfes 9 wird die Auswahl des Bildes einer Automatik überlassen. Dazu werden dem Prozessor Signale von einem Sensor 11 zugeführt, so dass beispielsweise bei Einlegen des Rückwärtsganges das Bild der Kamera 1 ausgewählt wird.

Fig. 3 zeigt die Bilder B1, B2 und B3 der Kameras 1, 2, 3 (Fig. 1), wobei sich die Bilder B1 und B2 überlappen und das Gesamtbild darstellen. Durch geeignete Bildverarbeitungsprogramme können die Bilder in diesem Bereich derart verarbeitet werden, dass ein Zusammenfügen nicht stört. Durch Drehen des Drehknopfes 9 (Fig. 2) kann das wiederzugebende Bild in Richtung des Doppelpfeils verschoben werden.

## Patentansprüche

1. Anordnung zur Verbesserung der Sicht aus einem Fahrzeug mittels Videokameras, die in verschiedene Blickrichtungen ausgerichtet sind, wobei die von den Videokameras (1, 2) erfassten, sich überschneidenden Kamerabilder (B1, B2) zu einem Gesamtbild zusammengefasst werden, wobei ein Bedienelement (9) zur Auswahl eines wiederzugebenden Teils (W) des Gesamtbildes vorgesehen ist, **dadurch gekennzeichnet dass** die Kamerabilder (B1, B2) im Wesentlichen horizontal nebeneinander liegen und dass mit Hilfe des Bedienelements (9) ein Schwenk innerhalb des Gesamtbildes möglich ist.

2. Anordnung nach Anspruch 1, **dadurch gekennzeichnet, dass** das Bedienelement ein Drehknopf (9) ist.

3. Anordnung nach Anspruch 1, **dadurch gekennzeichnet, dass** das Bedienelement von zwei Tasten gebildet ist.

4. Anordnung nach Anspruch 3, **dadurch gekennzeichnet, dass** die Tasten am Lenkrad angeordnet sind.

5. Anordnung nach einem der vorhergehenden Ansprüche, **dadurch gekennzeichnet, dass** die Auswahl ferner automatisch von mindestens einem Sensor (11) steuerbar ist.

6. Anordnung nach Anspruch 5, **dadurch gekennzeichnet, dass** zwischen der manuellen Auswahl und der vom Sensor (11) gesteuerten Auswahl eine Umschaltmöglichkeit (9) besteht.

7. Anordnung nach einem der Ansprüche 5 oder 6, **dadurch gekennzeichnet, dass** bei Vorliegen vorgegebener Sensorsignale eine Übersteuerung der mit Hilfe des Bedienelements (9) eingestellten Auswahl möglich ist.

8. Anordnung nach einem der vorhergehenden Ansprüche, **dadurch gekennzeichnet, dass** mindestens eine weitere Videokamera (3) vorgesehen ist, deren Bild (B3) alternativ zum ausgewählten Teil des Gesamtbildes wiedergegeben wird.

9. Anordnung nach einem der vorhergehenden Ansprüche, **dadurch gekennzeichnet, dass** der Abbildungsmaßstab des wiederzugebenden Teils (W) einstellbar ist.

10. Anordnung nach einem der vorhergehenden Ansprüche, **dadurch gekennzeichnet, dass** an einem den ausgewählten Teil des Gesamtbildes darstellenden Bildschirm (6) eine Anzeigevorrichtung (7, 8) vorgesehen ist, welche die jeweils getroffene Auswahl zeigt.

## Claims

1. Arrangement for improving the visibility from a vehicle by means of video cameras which are oriented in various viewing directions, wherein the intersecting camera images (B1, B2) which are captured by the video cameras (1, 2) are combined to form a composite image, wherein an operator control element (9) is provided for selecting a part (W) of the composite image which is to be reproduced, **characterized in that** the camera images (B1, B2) are located essentially horizontally one next to the other, and can pan within the composite image using the operator control element (9).

2. Arrangement according to Claim 1, **characterized in that** the operator control element is a rotary knob (9).

3. Arrangement according to Claim 1, **characterized in that** the operator control element is formed by two pushbutton keys.

4. Arrangement according to Claim 3, **characterized in that** the pushbutton keys are arranged on the steering wheel.

5. Arrangement according to one of the preceding claims, **characterized in that** the selection can also be controlled automatically by at least one sensor (11).

6. Arrangement according to Claim 5, **characterized in that** there is a switching option (9) between the manual selection and the selection controlled by the sensor (11).

7. Arrangement according to one of Claims 5 or 6, **characterized in that**, when predefined sensors signals are present, it is possible to override the selection which has been set using the operator control element (9).

8. Arrangement according to one of the preceding claims, **characterized in that** at least one further video camera (3) is provided whose image (B3) is reproduced as an alternative to the selected part of the composite image.

9. Arrangement according to one of the preceding claims, **characterized in that** the imaging scale of the part (W) which is to be reproduced can be adjusted.

10. Arrangement according to one of the preceding claims, **characterized in that** a display device (7, 8) which shows the selection which has been respectively made is provided on a screen (6) which displays the selected part of the composite image.

## Revendications

1. Système d'amélioration de la vision depuis un véhicule au moyen de caméras vidéo qui sont orientées dans différentes directions d'observation,
les images (B1, B2) saisies par les caméras vidéo (1, 2) et se superposant étant rassemblées en une image globale,
un élément de commande (9) qui sélectionne la partie (W) de l'image globale qui doit être reproduite étant prévu,
**caractérisé en ce que**
les images (B1, B2) des caméras sont situées essentiellement l'une à côté de l'autre dans la direction horizontale et **en ce que**
l'élément de commande (9) permet d'effectuer un pivotement à l'intérieur de l'image globale.

2. Système selon la revendication 1, **caractérisé en ce que** l'élément de commande est un bouton rotatif (9).

3. Système selon la revendication 1, **caractérisé en ce que** l'élément de commande est formé de deux touches.

4. Système selon la revendication 3, **caractérisé en ce que** les touches sont disposées sur le volant.

5. Système selon l'une des revendications précédentes, **caractérisé en ce que** la sélection peut en outre être commandée automatiquement par au moins une sonde (11).

6. Système selon la revendication 5, **caractérisé en ce qu'**il présente une possibilité de commutation (9) entre la sélection manuelle et la sélection commandée par la sonde (11).

7. Système selon l'une des revendications 5 ou 6, **caractérisé en ce que** si des signaux prédéterminés de sonde sont présents, la sélection établie à l'aide de l'élément de commande (9) peut être écrasée.

8. Système selon l'une des revendications précédentes, **caractérisé en ce qu'**au moins une autre caméra vidéo (3) dont l'image (B3) est reproduite en variante à la partie sélectionnée de l'image globale est prévue.

9. Système selon l'une des revendications précédentes, **caractérisé en ce que** l'échelle de représentation de la partie (W) à reproduire est réglable.

10. Système selon l'une des revendications précédentes, **caractérisé en ce qu'**un dispositif indicateur (7, 8) qui indique la sélection particulière effectuée est prévu sur un écran (6) qui représente la partie sélectionnée de l'image globale.
